# EUROPÄISCHE PATENTSCHRIFT

(11) **EP 3 405 624 B1**
(45) Veröffentlichungstag und Bekanntmachung des Hinweises auf die Patenterteilung: **22.06.2022**
(21) Anmeldenummer: 16701334.1
(22) Anmeldetag: 22.01.2016
(51) Int. Cl.: E04F 13/08, F16B 5/02, F16B 43/00, F16B 37/00, F16B 1/00

(54) **FIXIERSCHEIBE UND VERFAHREN ZUR ANFÄNGLICHEN FIXIERUNG EINES BEFESTIGUNGSELEMENTS**
POSITIONING WASHER AND PROCEDURE FOR INITIAL FIXING OF A FASTENING ELEMENT
RONDELLE DE POSITIONNEMENT ET PROCÉDÉ DE PREMIÈRE FIXATION D'UN ÉLÉMENT DE FIXATION

(43) Veröffentlichungstag der Anmeldung: 28.11.2018
(73) Patentinhaber: EJOT SE & Co. KG, 57319 Bad Berleburg (DE)
(72) Erfinder: HACKLER, Erhard, 57319 Bad Berleburg (DE); HEINRICH, Kostja, 57319 Bad Berleburg (DE)
(74) Vertreter: Bardehle Pagenberg Partnerschaft mbB Patentanwälte Rechtsanwälte
(86) Internationale Anmeldenummer: PCT/EP2016/051326
(87) Internationale Veröffentlichungsnummer: WO 2017/125166

(56) Entgegenhaltungen:
- EP-A2- 0 896 109
- EP-A2- 1 876 314
- GB-A- 2 496 865
- US-A1- 2006 263 172
- US-A1- 2008 175 689

## Beschreibung

Die vorliegende Erfindung betrifft eine Fixierscheibe zur anfänglichen Fixierung eines Befestigungselements in einer Öffnung, insbesondere zur gleitenden Befestigung einer Fassadenplatte an einem Untergrund.

Fassadenplatten werden mit unterschiedlichen Hilfsmitteln an einem Untergrund befestigt. Es gibt Befestigungspunkte an denen die Fassadenplatte fest, das heißt genau an der jeweiligen Stelle an dem Untergrund befestigt wird und es gibt Stellen an denen die Fassadenplatte gleitend und zwängungsfrei an dem Untergrund befestigt wird. Im Gegensatz zu der festen Befestigung ermöglicht die gleitende Befestigung, dass sich die Fassadenplatte relativ zu dem Befestigungspunkt bewegen kann. Hierbei handelt es sich um eine Bewegung parallel zur flächigen Erstreckung der Oberfläche der Fassadenplatte. Da eine Fassadenplatte unterschiedlichsten Temperaturen und anderen Umwelteinflüssen ausgesetzt ist, verändert sie sich relativ zu der Unterkonstruktion. Damit die Fassadenplatten trotz derartiger Einflüsse zwängungsfrei gehalten werden, werden die Fassadenplatten zumindest teilweise gleitend befestigt.

Es sind diverse Mittel bekannt, mit denen Gegenstände an einem Untergrund befestigt werden können, die zum Beispiel in GB 2 496 865 A, EP 1 876 314 A und US 2006/263172 A1 beschrieben sind. GB 2 496 865 A beschreibt ein Abstandsmittel zum Anbringen einer Trockenbauplatte an einer Wand. Das Abstandsmittel kann einen Kragen aufweisen und s- oder z-förmige, elastische Scheiben, die eine seitliche Bewegung zwischen der Wand und der Trockenbauplatte ermöglichen. EP 1 876 314 A beschreibt ein Montageelement, das durch eine Ausgleichsbuchse aus elastischem Material gebildet ist und eine Relativbewegung zwischen einer Fassadenplatte und einem Befestigungselement aufnimmt. US 2006/263172 A1 beschreibt eine Unterlegscheibe zur Verwendung mit einem Befestigungselement zum Verbinden zweier Komponenten oder Platten, wobei der Unterlegscheibenkörper einen inneren Abschnitt und einen äußeren Abschnitt umfasst, die durch eine Verbindungswand verbunden sind.

Eine gleitende Befestigung kann dadurch erzielt werden, dass die Öffnung in der das Befestigungselement angeordnet wird, größer ist als der Querschnitt des Befestigungselements. Hierdurch ergibt sich zwischen dem Befestigungselement und dem Rand der Öffnung ein Freiraum, aufgrund dessen sich das zu befestigende Bauteil, beispielsweise die Fassadenplatte, relativ zu dem Befestigungselement bewegen kann. Damit das zu befestigende Bauteil in alle Richtungen die gewünschte Bewegungsfreiheit hat, ist es wichtig, dass das Befestigungselement an einer vorbestimmten Position, vorzugsweise mittig in der Öffnung des Bauteils gesetzt wird. Es hat sich aber gezeigt, dass dies auf der Baustelle mit Hilfe der derzeit verwendeten Werkzeuge nicht sichergestellt werden kann.

Ausgehend davon stellt sich die Aufgabe ein Hilfsmittel bereitzustellen, mit dem die Montage von Bauteilen an einem Untergrund vereinfacht werden kann.

Erfindungsgemäß wird die Aufgabe durch die Fixierscheibe gemäß Anspruch 1 und das Verfahren gemäß Anspruch 5 gelöst. Bevorzugte Ausführungsformen ergeben sich aus den abhängigen Ansprüchen und aus der nachfolgenden Beschreibung.

Die Erfindung betrifft eine Scheibe zur anfänglichen Fixierung eines Befestigungselements in einer Öffnung, die deshalb im Folgenden als Fixierscheibe bezeichnet wird. Die Fixierscheibe weist einen scheibenförmigen Bereich auf. Der scheibenförmige Bereich ist vorzugsweise ein Bereich, dessen Erstreckung in einer Ebene größer ist als seine Dicke. Weiter bevorzugt ist die Erstreckung in der Ebene um ein Vielfaches größer als die Dicke. Die Fixierscheibe wird erfindungsgemäß dafür verwendet, ein Befestigungselement in einem Bohrloch eines zu befestigenden Bauteils anfänglich zu fixieren und zu positionieren. Erfindungsgemäß ist die Fixierscheibe, insbesondere der scheibenförmige Bereich derart ausgestaltet, dass die Fixierscheibe bei bestimmungsgemäßer Verwendung im Wesentlichen in einer vorbestimmten Position in der Öffnung angeordnet wird. Vorzugsweise wird die Fixierscheibe derart in der Öffnung angeordnet, dass der Rand der Fixierscheibe, insbesondere des scheibenförmigen Bereichs an mehreren Stellen gegen den Rand der Öffnung stößt. Es ist aber grundsätzlich möglich, dass die Fixierscheibe innerhalb der Öffnung noch in einem gewissen Maße bewegt werden kann. So kann beispielsweise eine kreisförmige Fixierscheibe in einer runden Öffnung beliebig gedreht werden. Darüber hinaus kann es beispielsweise möglich sein, dass die Fixierscheibe in der Öffnung ein gewisses Spiel hat, das heißt der äußere Rand der Fixierscheibe von dem inneren Rand der Öffnung beabstandet ist, so dass sich die Fixierscheibe etwas in der Öffnung bewegen kann.

Erfindungsgemäß weist die Fixierscheibe, insbesondere der scheibenförmige Bereich mindestens ein Fixiermittel auf. Im Rahmen der vorliegenden Erfindung bezeichnet ein Fixiermittel ein Mittel, das bei dem Setzen des Befestigungselements den Monteur dabei unterstützt, das Befestigungselement an einer vorbestimmten Position relativ zu der Öffnung zu setzen. Das Fixiermittel hält das Befestigungselement zumindest beim anfänglichen Setzen in der vorbestimmten Position.

Das Befestigungselement kann beispielsweise eine Schraube oder ein Nagel sein oder auch ein Bohrer zum Setzen eines Niet und weist vorzugsweise einen Kopf auf mit einem Querschnitt, der größer ist als die Öffnung.

Gemäß einer bevorzugten Ausführungsform ist das mindestens eine Fixiermittel im Wesentlichen mittig von der Fixierscheibe, insbesondere des scheibenförmigen Bereichs angeordnet.

Ein derartiges Fixiermittel kann auf viele verschiedene Arten realisiert werden.

Grundsätzlich ist das Mittel derart gestaltet, dass es die Spitze des Befestigungselements zumindest am Anfang des Setzens im Wesentlichen an der gleichen Position beziehungsweise in dem gleichen Bereich hält. Dieser Bereich wird im Folgenden als Fixierbereich bezeichnet.

Dies kann beispielsweise dadurch realisiert werden, dass die Fixierscheibe im scheibenförmigen Bereich einen Höhenunterschied aufweist. So kann die Oberseite des Fixierbereichs tiefer angeordnet sein als die Oberseite des um den Fixierbereich herum angeordneten Bereichs des scheibenförmigen Bereichs, wobei der höher angeordnete Bereich nicht notwendigerweise unmittelbar an den Fixierbereich angrenzen muss. Im Rahmen der vorliegenden Erfindung ist die Unterseite die Seite des scheibenförmigen Bereichs, die in Richtung des Untergrunds zeigt auf dem das Bauteil befestigt werden soll und die Oberseite, die gegenüberliegende Seite. Somit ist ein tiefer angeordneter Bereich näher an dem Untergrund als ein höher angeordneter Bereich.

Gemäß einer Ausführungsform der vorliegenden Erfindung wird das Fixiermittel durch eine Ausnehmung in dem scheibenförmigen Bereich gebildet. Die Ausnehmung, die auch als Öffnung bezeichnet werden kann, ist ein Loch in dem scheibenförmigen Bereich der Fixierschiebe. In dem Fixierbereich befindet sich also zwischen der Oberseite der Fixierscheibe und der Unterseite des scheibenförmigen Bereichs kein Material. Das zu setzende Befestigungselement dringt mit seiner Spitze in die Ausnehmung ein und ist somit tiefer als die Oberseite eines um die Ausnehmung herum angeordneten Bereichs der Fixierscheibe. Gemäß einer bevorzugten Ausführungsform grenzt dieser Bereich unmittelbar an die Ausnehmung. Dadurch kann sichergestellt werden, dass das Befestigungselement zumindest am Anfang des Setzens durch die Ausnehmung in einer vorbestimmten Position, nämlich in der Ausnehmung gehalten wird.

Gemäß einer weiteren Ausführungsform wird das Fixiermittel durch eine Vertiefung gebildet. Eine Vertiefung ist ein Bereich, in dem die Oberseite des scheibenförmigen Bereichs tiefer ist, als die Oberseite eines um die Vertiefung herum angeordneten Bereichs. Gemäß einer bevorzugten Ausführungsform grenzt der höhere, um die Vertiefung herum angeordnete Bereich unmittelbar an die Vertiefung. Auch durch die Vertiefung kann sichergestellt werden, dass das Befestigungselement zumindest am Anfang des Setzens in einer vorbestimmten Position, das heißt in diesem Fall in der Vertiefung gehalten wird.

Der Höhenunterschied kann aber auch durch andere Elemente realisiert werden. Gemäß einer weiteren Ausführungsform weist der scheibenförmige Bereich einen Vorsprung auf. Der Vorsprung kann um einen Bereich, den Fixierbereich herum angeordnet sein. Die Oberseite des scheibenförmigen Bereichs innerhalb des Vorsprungs liegt somit tiefer als die Oberseite des Vorsprungs. Somit kann auch mit Hilfe eines Vorsprungs sichergestellt werden, dass das Befestigungselement zumindest am Anfang des Setzens in einer vorbestimmten Position, nämlich innerhalb des Vorsprungs gehalten wird.

Der Fixierbereich muss aber nicht notwendigerweise in alle Richtungen durch einen höher liegenden Bereich abgegrenzt werden. Es kann ausreichen, wenn der Fixierbereich zumindest teilweise, das heißt an bestimmten Punkten gegenüber des restlichen scheibenförmigen Bereichs durch einen Höhenunterschied abgegrenzt wird und somit das anfängliche Fixieren des Befestigungselements vereinfacht.

Der Höhenunterschied muss auch nicht notwendigerweise durch eine Kante gebildet werden. Es kann auch ausreichen, wenn durch eine Schräge zwischen den beiden Ebenen eine Bewegung der Spitze des Befestigungselements beim Setzen des Befestigungselements erschwert wird.

Dieser Höhenunterschied kann von Anfang an existieren. Gemäß einer Ausführungsform der vorliegenden Erfindung wird dieser Höhenunterschied aber erst bei der Montage erzeugt. Beispielsweise kann der scheibenförmige Bereich im Fixierbereich eine Deckschicht aufweisen, dessen Oberseite im Wesentlichen in der gleichen Ebene liegt, wie die Oberseite des restlichen scheibenförmigen Bereichs. In dieser Deckschicht kann dann mit Hilfe der Spitze des Befestigungselements eine Ausnehmung gebildet werden, die das Befestigungselement anfänglich fixiert.

Der scheibenförmige Bereich der erfindungsgemäßen Fixierscheibe kann auf unterschiedlichste Weise ausgestaltet sein. Er kann zum Beispiel eine durchgehende Scheibe sein. Die Scheibe kann aber auch weitere Ausnehmungen aufweisen. Die Scheibe kann beispielsweise netzförmig ausgestaltet sein. Darüber hinaus muss die Scheibe auch nicht am kompletten Umfang geeignet sein, den Rand der Öffnung zu kontaktieren. Es ist ausreichend, wenn der Rand des scheibenförmigen Bereichs oder der Rand der Fixierscheibe den Rand der Öffnungen an mehreren Punkten, das heißt an mindestens zwei Punkten, weiter bevorzugt an mindestens drei Punkten kontaktiert. In einer Ausführungsform besteht der scheibenförmige Bereich aus Abstandshaltern, die das Fixiermittel in der vorbestimmten Position in der Öffnung anordnet.

Der scheibenförmige Bereich muss nicht notwendigerweise durch eine flache Ebene gebildet werden. Auch andere Formen sind denkbar. Gemäß einer Ausführungsform kann der scheibenförmige Bereich trichterförmig ausgestaltet sein. Der Trichter kann beispielsweise derart ausgestaltet sein, dass die Oberseite des scheibenförmigen Bereichs in der Mitte der Fixierscheibe tiefer angeordnet ist als am Rand. Diese Ausgestaltung des scheibenförmigen Bereichs bildet auch ein Fixiermittel, da durch die Trichterform das Befestigungselement anfänglich beim Setzen in einer vorbestimmten Position, nämlich an der tiefsten Stelle des Trichters gehalten wird.

Gemäß einer bevorzugten Ausführungsform ist der Querschnitt des scheibenförmigen Bereichs größer als der Querschnitt des Befestigungselements. Wenn das Befestigungselement gesetzt wurde, befindet sich somit zwischen dem Befestigungselement und dem Rand der Öffnung ein Spalt.

Gemäß einer weiteren Ausführungsform ist der Querschnitt des Fixierbereichs etwas größer als der Querschnitt des Befestigungselements. Alternativ kann der Querschnitt des Fixierbereichs aber auch kleiner sein, als der Querschnitt des Befestigungselements. In diesem Fall ist der scheibenförmige Bereich vorzugsweise derart ausgestaltet, dass der Fixierbereich bei dem Setzen des Befestigungselements durch das Befestigungselement vergrößert wird, damit das Befestigungselement bis zur gewünschten Tiefe gesetzt werden kann.

Gemäß der vorliegenden Erfindung ist die Fixierscheibe derart ausgestaltet, dass sie nach dem Setzen des Befestigungselements eine Relativbewegung des Befestigungselements zu der Öffnung ermöglicht. Dies kann dadurch realisiert werden, dass die Fixierscheibe derart ausgestaltet ist, dass der scheibenförmige Bereich einer Bewegung der Fassadenplatte parallel zur Erstreckung der Fassadenplatte keinen beziehungsweise nur einen relative geringen Widerstand entgegen setzt. Gemäß einer Ausführungsform besteht der scheibenförmige Bereich aus einer relativ dünnen Kunststoffhaut, beispielsweise mit einer Dicke zwischen 0,1 mm und 1,0 mm, weiter bevorzugt zwischen 0,4 und 0,6 mm. Durch diese oder andere Ausgestaltungen des scheibenförmigen Bereichs der vorliegenden Erfindung ist dieser aufbrechbar. Der scheibenförmige Bereich wird in einer Ausführungsform infolge der Relativbewegung durch Aufbrechen zumindest teilweise zerstört. In einer weiteren Ausführungsform wird beim Setzen des Befestigungselements in einem Fixierbereich mit kleinerem Querschnitt, der Fixierbereich aufgebrochen und dadurch die Struktur des scheibenförmigen Bereichs geschwächt, so dass die Relativbewegung zwischen Befestigungselement und Öffnung des Bauteils möglich ist.

Gemäß der vorliegenden Erfindung weist die Fixierscheibe einen Kragen auf. Dieser Kragen ist ausgestaltet, um auf dem Rand der Öffnung aufzuliegen. Mit dem Kragen kann zum einen sichergestellt werden, dass die Fixierscheibe in einer vorbestimmten Tiefe in der Öffnung angeordnet wird. Damit wird zum Beispiel verhindert, dass die Fixierscheibe an der Innenseite, das heißt der dem Untergrund zugewandten Seite aus der Öffnung wieder austritt und somit nicht mehr vom Rand der Öffnung fixiert wird. Darüber hinaus schützt der Kragen den Rand der Öffnung, so dass der Kopf des Befestigungselements über der Öffnung gleiten kann, ohne die Oberfläche des zu befestigenden Bauteils, beispielsweise der Fassadenplatte, zu beschädigen. Zum anderen wird durch den Kragen eine auf der Fassadenplatte befindliche Schutzfläche nur im Bereich des Kragens und nicht im Bereich des Kopfes des Befestigungselements gegen die Fassadenplatte gedrückt. Hierdurch ist es einfacher, die Schutzfläche später einfach und sauber zu entfernen.

Vorzugsweise ist die Fixierscheibe derart ausgestaltet, dass beim Setzen des Befestigungselements die Unterseite der Fixierscheibe auf dem Untergrund aufliegt, an dem das Bauteil befestigt werden soll. Dies kann zum Beispiel durch einen entsprechenden Abstand zwischen der Unterseite des Kragens und der Unterseite der Fixierscheibe sichergestellt werden.

In einer weiteren Ausführungsform weist die Fixierscheibe am Rand einen Vorsprung auf, der dicker ist als der restliche scheibenförmige Bereich. Dieser Vorsprung befindet sich vorzugsweise am äußeren Rand des scheibenförmigen Bereichs. Es kann sich um einen umlaufenden Vorsprung handeln oder um einen Vorsprung an einer oder mehreren Stellen. Mit diesem Vorsprung kann die Anordnung der Fixierscheibe in der Öffnung verbessert werden. Darüber hinaus kann die Gefahr reduziert werden, dass die Scheibe auf der Innenseite der Öffnung wieder austritt, wenn ein Abstand zwischen dem Untergrund und dem Bauteil besteht. Die Dicke des Vorsprungs wird in Abhängigkeit von der Dicke der zu befestigenden Fassadenplatte und/oder des Abstands zwischen Fassadenplatte und Untergrund gewählt. In einer Ausführungsform wird ein derart dicker Vorsprung gewählt, dass der Kopf des Befestigungselements auf dem Vorsprung und nicht auf dem Bauteil aufliegt. In diesem Fall liegt weder ein Teil der Fixierscheibe noch der Kopf des Befestigungselements auf dem Bauteil, beispielsweise der Fassadenplatte auf, so dass eine darauf befindliche Schutzfläche weder von der Fixierscheibe noch von dem Kopf des Befestigungselements gegen die Fassadenplatte gedrückt wird und somit rückstandslos entfernt werden kann.

Die Fixierscheibe wird vorzugsweise aus einem Material hergestellt, das eine feste Beschaffenheit und gute Gleiteigenschaften aufweist, damit die Fixierscheibe während der Montage formstabil bleibt. Bei der Verwendung einer Fixierscheibe mit Kragen ist es auch wichtig, dass dieser auch nach Gleiten in verschiedenen Richtungen in der gewünschten Position bleibt. Außerdem sollte das Material derart gewählt werden, dass die Druckkräfte an die Unterkonstruktion weiter geleitet werden. Vorzugsweise werden deshalb thermoplastische Kunststoffe oder teilkristalline Kunststoffe verwendet. Die Kunststoffe sind vorzugsweise mit Füll- oder Verstärkungsstoffen verstärkt. Vorzugsweise wird Glasfaser zur Verstärkung verwendet.

Die Erfindung betrifft auch ein Verfahren gemäß Anspruch 5 zum anfänglichen Fixieren eines Befestigungselements in einer Öffnung eines zu befestigenden Bauteils, insbesondere in einem Bohrloch einer Fassadenplatte, beim Setzen des Befestigungselements. In einem ersten Schritt wird eine Fixierscheibe in der Öffnung angeordnet. Die Fixierscheibe, insbesondere der scheibenförmige Bereich der Fixierscheibe ist derart ausgestaltet, dass die Fixierscheibe im Wesentlichen in einer vorbestimmten Position in der Öffnung angeordnet wird. Danach wird die Spitze des Befestigungselements im Bereich eines Fixiermittels des scheibenförmigen Bereichs angeordnet. Das Fixiermittel ist derart ausgestaltet, dass es dafür sorgt, dass das Befestigungselement an einer vorbestimmten Position relativ zu der Öffnung gesetzt wird. Darüber hinaus ist der scheibenförmige Bereich der Fixierscheibe derart aufbrechbar, dass er nach dem Setzen des Befestigungselements eine Relativbewegung des Befestigungselements zu der Öffnung ermöglicht. So kann zum Beispiel durch das Setzen des Befestigungselements die Struktur des scheibenförmigen Bereichs derart geschwächt werden, dass einer derartigen Relativbewegung kein substantieller Widerstand entgegenwirkt.

Die Erfindung betrifft auch ein System bestehend aus der Fixierscheibe und einem entsprechenden Befestigungselement und aus der Verwendung der Fixierscheibe mit einem Befestigungselement.

Im Folgenden wird der Gegenstand der vorliegenden Erfindung anhand der beiliegenden Zeichnungen beispielhaft erläutert, wobei
- Figur 1: eine Ausführungsform der erfindungsgemäßen Fixierscheibe mit Kragen und Ausnehmung zeigt;
- Figur 2: eine Ausführungsform der Fixierscheibe ohne den erfindungsgemäßen Kragen mit einem Fixiermittel, das durch einen Vorsprung gebildet ist, zeigt;
- Figuren 3a,: 3b und 3c weitere Ausführungsformen der Fixierscheibe ohne den erfindungsgemäßen Kragen zeigen;
- Figur 4: eine Ausführungsform der Fixierscheibe ohne den erfindungsgemäßen Kragen zeigt, bei der die Scheibe durch drei Abstandhalter gebildet wird; und
- Figur 5: eine Ausführungsform der erfindungsgemäßen Fixierscheibe für ein Langloch zeigt.

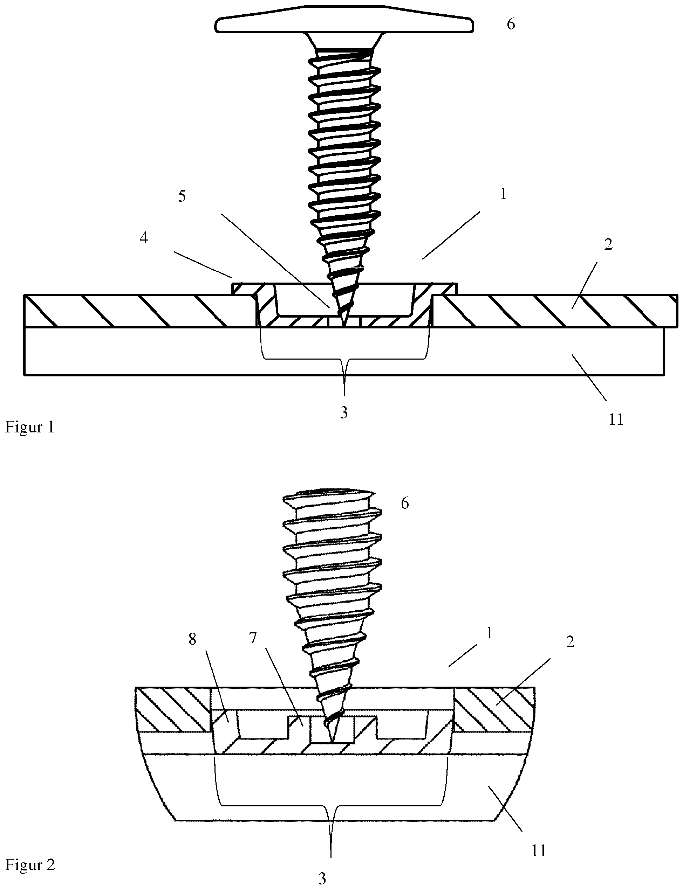

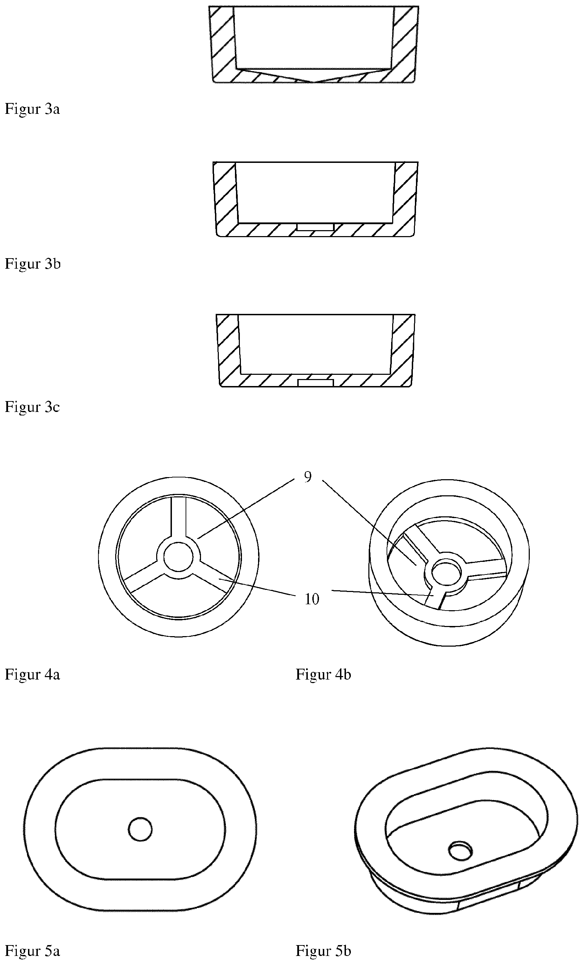

Figur 1 zeigt einen Querschnitt einer beispielhaften Ausführungsform der erfindungsgemäßen Fixierscheibe 1. Die Fixierscheibe 1 ist in einer Öffnung eines zu befestigenden Bauteils 2 angeordnet. In den Figuren 1 bis 4 sind Ausführungsformen gezeigt, in denen die Fixierscheibe 1 und die Öffnung in dem zu befestigenden Bauteil kreisförmig sind. Dem Fachmann ist aber klar, dass die Fixierscheibe 1 und die Öffnung auch andere Formen aufweisen können, beispielsweise dreieckig, quadratisch, sechseckig, achteckig, usw., wobei die Fixierscheibe und die Öffnung nicht notwendigerweise die gleiche Form aufweisen müssen. Wie in Figur 5 gezeigt, kann die Öffnung auch ein Langloch sein und die Fixierscheibe eine entsprechende Form aufweisen.

Die Fixierscheibe 1 in Figur 1 weist einen scheibenförmigen Bereich 3 und einen Kragen 4 auf. Der scheibenförmige Bereich 3 ist derart ausgestaltet, dass er mit etwas Spiel von der Öffnung in dem zu befestigenden Bauteil 2 gehalten wird. Dadurch wird sichergestellt, dass die Fixierscheibe 1 in der vorbestimmten Position in der Öffnung angeordnet wird. Unterhalb der Fixierscheibe 1 und des Bauteils 2 befindet sich der Untergrund 11, an dem das Bauteil mit Hilfe der Fixierscheibe 1 und dem Befestigungselement 6 befestigt wird. In der in Figur 1 gezeigten Ausführungsform liegt die Fixierscheibe unmittelbar auf dem Untergrund 11 auf, um ein bestmögliches Befestigen zu ermöglichen.

Die in Figur 1 gezeigte Fixierscheibe 1 weist als Fixiermittel eine Ausnehmung 5 auf. Diese Ausnehmung 5 hat einen Querschnitt, der kleiner ist als der Querschnitt des Schafts des Befestigungselements 6. Beim Setzen des Befestigungselements 6, sorgt die Ausnehmung 5 dafür, dass die Spitze des Befestigungselements 6 am Anfang in einer vorbestimmten Position relativ zu der Öffnung in dem Bauteil 2 in einem unter der Fixierscheibe 1 befindlichen Untergrund 11 angeordnet wird. Sobald sich die Spitze des Befestigungselements 6 in dem Untergrund 11 befindet, muss die Fixierscheibe 1 das Befestigungselement 6 nicht mehr halten. In der in Figur 1 gezeigten Ausführungsform sorgt der Schaft des Befestigungselements 6 mit seinem größeren Querschnitt dann dafür, dass die Ausnehmung 5 aufgeweitet wird. Dadurch wird der scheibenförmige Bereich 3 der Fixierscheibe 1 derart konstruktiv geschwächt, dass eine Relativbewegung des Befestigungselements 6 zu der Öffnung möglich ist.

Die in Figur 1 gezeigte Ausführungsform der Fixierscheibe 1 weist erfindungsgemäß einen Kragen 4 auf. In der in Figur 1 gezeigten Ausführungsform wird der Kragen 4 durch einen am Rand der Fixierscheibe 1 angeordneten Vorsprung und einen radialen Überhang gebildet, der auf der Oberfläche des zu befestigenden Bauteils an dessen Rand aufliegt. Grundsätzlich kann der Kragen aber auch nur durch den Überhang gebildet werden. Der Kragen 4 sorgt dafür, dass die Fixierscheibe 1 in einer vorbestimmten Tiefe in der Öffnung angeordnet wird und dass die Fixierscheibe 1 nicht durch die Öffnung hindurchrutscht, das heißt nicht auf der Innenseite des Bauteils, die dem Untergrund 11 zugewandt ist, austritt.

Figur 2 zeigt eine Ausführungsform der Fixierscheibe 1 ohne den erfindungsgemäßen Kragen. Bei dieser Ausführungsform wird das Fixiermittel durch einen kreisförmigen Vorsprung 7 gebildet, der auf dem scheibenförmigen Bereich 3 angeordnet ist. Der scheibenförmige Bereich 3 ist innerhalb des Vorsprungs 7 derart ausgestaltet, dass er einfach von der Spitze des Befestigungselements 6 durchstoßen werden kann.

In der in Figur 2 gezeigten Ausführungsform weist die Fixierscheibe 1 keinen Kragen, sondern am Rand des scheibenförmigen Bereichs lediglich einen Vorsprung 8 auf, der die Anordnung der Fixierscheibe 1 in der Öffnung verbessert und die Gefahr reduziert, dass die Scheibe auf der Innenseite des Bauteils durch die Öffnung wieder austritt, wenn das Bauteil - wie in Figur 2 beispielhaft gezeigt - von dem Untergrund 11 beabstandet angeordnet ist.

Die Figuren 3a, 3b und 3c zeigen weitere Beispiele für mögliche Ausgestaltungen des Fixiermittels ohne den erfindungsgemäßen Kragen. In Figur 3a wird das Fixiermittel durch die Trichterform des scheibenförmigen Bereichs 3 gebildet. In Figur 3b wird eine Vertiefung zur Bildung des Fixiermittels verwendet. In der Mitte des scheibenförmigen Bereichs befindet sich ein Bereich in dem die Oberseite des scheibenförmigen Bereichs tiefer ist als in dem daran angrenzenden Bereich. In Figur 3c befindet sich in der Mitte des scheibenförmigen Bereichs eine Deckschicht, die im Wesentlichen in der gleichen Ebene liegt wie der restliche scheibenförmige Bereich. Diese Deckschicht kann von der Spitze des Befestigungselements einfach durchstoßen werden, um eine Ausnehmung zu bilden, die dann als Fixiermittel wirkt.

Figur 4 zeigt eine Draufsicht und eine perspektivische Ansicht einer weiteren Ausführungsform der Fixierscheibe 1 ohne den erfindungsgemäßen Kragen. In dieser Ausführungsform wird das Fixiermittel durch einen Ring 9 gebildet. Dieser Ring 9 wird mit Hilfe von mehreren Abstandshaltern, die zusammen mit dem Ring 9 den scheibenförmigen Bereich 3 bilden - im vorliegenden Beispiel sind es drei Abstandshalter 10 - in einer vorbestimmten Position zu der Öffnung in dem Bauteil 2 gehalten.

Figur 5 zeigt eine Draufsicht und eine perspektivische Ansicht auf eine weitere Ausführungsform der erfindungsgemäßen Fixierscheibe 1. In dieser Ausführungsform ist die Fixierscheibe 1 ausgestaltet, um in einem Langloch angeordnet zu werden.

## Patentansprüche

1. Fixierscheibe (1) zur anfänglichen Fixierung eines Befestigungselements (6) in einer Öffnung, insbesondere in einem Bohrloch einer Fassadenplatte, beim Setzen des Befestigungselements (6),
wobei die Fixierscheibe (1) einen scheibenförmigen Bereich (3) und einen Kragen (4) aufweist,
wobei der Kragen (4) und der scheibenförmige Bereich (3) derart ausgestaltet sind dass der Kragen (4) geeignet ist, um auf einem Rand der Öffnung aufzuliegen und die Fixierscheibe (1) im Wesentlichen in einer vorbestimmten Position in der Öffnung anzuordnen ,
wobei der scheibenförmige Bereich (3) ein Fixiermittel aufweist, das derart ausgestaltet ist, dass es das Befestigungselement (6) anfänglich beim Setzen an einer vorbestimmten Position relativ zu der Öffnung halten kann, und
wobei der scheibenförmige Bereich (3) derart aufbrechbar ist, dass er nach dem Setzen des Befestigungselements (6) eine Bewegung des Befestigungselements (6) relativ zu der Öffnung ermöglicht.

2. Fixierscheibe (1) gemäß Anspruch 1, wobei das Fixiermittel durch eine Ausnehmung (5) in dem scheibenförmigen Bereich (3) gebildet ist.

3. Fixierscheibe (1) gemäß Anspruch 1, wobei das Fixiermittel durch einen Vorsprung (7) auf dem scheibenförmigen Bereich (3) gebildet ist.

4. Fixierscheibe (1) gemäß Anspruch 1, wobei das Fixiermittel durch eine Vertiefung in dem scheibenförmigen Bereich (3) gebildet ist.

5. Verfahren zur anfänglichen Fixierung eines Befestigungselements (6) in einer Öffnung, insbesondere in einem Bohrloch einer Fassadenplatte, beim Setzen des Befestigungselements (6), mit Hilfe einer Fixierscheibe (1) mit einem scheibenförmigen Bereich (3) und einem Kragen (4), wobei der scheibenförmige Bereich (3) ein Fixiermittel aufweist und wobei das Verfahren die folgenden Schritte aufweist:
Anordnen der Fixierscheibe (1) mit einem scheibenförmigen Bereich (3) im Wesentlichen in einer vorbestimmten Position in der Öffnung, so dass der Kragen (4) der Fixierscheibe (1) auf einem Rand der Öffnung aufliegt;
Anordnen des Befestigungselements (6) im Bereich des Fixiermittels des scheibenförmigen Bereichs (3) der Fixierscheibe (1) und
Setzen des Befestigungselements (6), wobei das Fixiermittel das Befestigungselement (6) anfänglich an der vorbestimmten Position relativ zu der Öffnung hält und Aufbrechen des scheibenförmigen Bereichs, so dass nach dem Setzen eine Bewegung des Befestigungselements relativ zu der Öffnung möglich ist.

6. Verwendung einer Fixierscheibe (1) gemäß einem der Ansprüche 1 bis 4 mit einem Befestigungselement (6) zur anfänglichen Fixierung des Befestigungselements (6) in einem Bohrloch einer Fassadenplatte, beim Setzen des Befestigungselements (6).

## Claims

1. Fixing disc (1) for initial fixing of a fastening element (6) in an opening, in particular in a drilled hole of a facade panel, during setting the fastening element (6),
wherein the fixing disc (1) comprises a disc-shaped portion (3) and a collar (4), wherein the collar (4) and the disc-shaped portion (3) are configured such that the collar (4) is suitable to rest on an edge of the opening and to locate the fixing disc (1) substantially in a predetermined position in the opening,
wherein the disc-shaped portion (3) comprises a fixing means configured such that it initially holds the fastening element (6) during setting at a predetermined position relative to the opening, and
wherein the disc-shaped portion (3) is frangible such that it allows movement of the fastening element (6) relative to the opening after setting of the fastening element (6).

2. Fixing disc (1) according to claim 1, wherein the fixing means is formed by a recess (5) in the disc-shaped portion (3).

3. Fixing disc (1) according to claim 1, wherein the fixing means is formed by a protrusion (7) on said disc-shaped portion (3).

4. Fixing disc (1) according to claim 1, wherein the fixing means is formed by a depression in the disc-shaped portion (3).

5. Method for initial fixing of a fastening element (6) in an opening, in particular in a drilled hole of a facade panel, during setting the fastening element (6), by means of a fixing disc (1) having a disc-shaped portion (3) and a collar (4), wherein the disc-shaped portion (3) comprises a fixing means, and wherein the method comprises the following steps:
arranging the fixing disc (1) with a disc-shaped portion (3) substantially in a predetermined position in the opening so that the collar (4) of the fixing disc (1) rests on an edge of the opening;
arranging the fastening element (6) in a portion of the fixing means of the disc-shaped portion (3) of the fixing disc (1), and
setting the fastening element (6), wherein the fixing means initially holds the fastening element (6) at the predetermined position relative to the opening, and
breaking the disc-shaped portion such that after setting a movement of the fastening element relative to the opening is possible.

6. Using a fixing disc (1) according to any one of claims 1 to 4 with a fastening element (6) for initial fixing of the fastening element (6) in a drilled hole of a facade panel, during setting the fastening element (6).

## Revendications

1. Rondelle de positionnement (1) pour le positionnement initial d'un élément de fixation (6) dans une ouverture, en particulier dans un trou d'une plaque de façade, lors de la pose de l'élément de fixation (6),
la rondelle de positionnement (1) comportant une zone en forme de disque (3) et un rebord (4),
le rebord (4) et la zone en forme de disque (3) étant conçus de façon que le rebord (4) soit apte à reposer sur un bord de l'ouverture et à disposer la rondelle de positionnement (1) sensiblement dans une position prédéterminée dans l'ouverture,
la zone en forme de disque (3) comportant un moyen de positionnement qui est conçu de façon à pouvoir maintenir, au début de la pose, l'élément de fixation (6) dans une position prédéterminée par rapport à l'ouverture,
la zone en forme de disque (3) pouvant être enfoncée, de façon à permettre, après la pose de l'élément de fixation (6), un déplacement de l'élément de fixation (6) par rapport à l'ouverture.

2. Rondelle de positionnement (1) selon la revendication 1, le moyen de positionnement étant formé par un évidement (5) dans la zone en forme de disque (3).

3. Rondelle de positionnement (1) selon la revendication 1, le moyen de positionnement étant formé par une saillie (7) sur la zone en forme de disque (3).

4. Rondelle de positionnement (1) selon la revendication 1, le moyen de positionnement étant formé par un creux dans la zone en forme de disque (3).

5. Procédé de positionnement initial d'un élément de fixation (6) dans une ouverture, en particulier dans un trou d'une plaque de façade, lors de la pose de l'élément de fixation (6), à l'aide d'une rondelle de positionnement (1), comprenant une zone en forme de disque (3) et un rebord (4), la zone en forme de disque (3) comportant un moyen de positionnement, et le procédé comportant les étapes suivantes :
mise en place de la rondelle de positionnement (1) avec une zone en forme de disque (3) sensiblement dans une position prédéterminée dans l'ouverture, de façon que le rebord (4) de la rondelle de positionnement (1) repose sur un bord de l'ouverture ;
mise en place de l'élément de fixation (6) dans la zone du moyen de positionnement de la zone en forme de disque (3) de la rondelle de positionnement (1) et
pose de l'élément de fixation (6), le moyen de positionnement maintenant, au début, l'élément de fixation (6) dans la position prédéterminée par rapport à l'ouverture, et enfoncement de la zone en forme de disque, de sorte qu'après la pose, un déplacement de l'élément de fixation par rapport à l'ouverture est possible.

6. Utilisation d'une rondelle de positionnement (1) selon une des revendications 1 à 4, comprenant un élément de fixation (6) pour le positionnement initial de l'élément de fixation (6) dans un trou d'une plaque de façade, lors de la pose d'un élément de fixation (6).
